# EUROPEAN PATENT SPECIFICATION

(11) **EP 2 762 719 B1**
(45) Date of publication and mention of the grant of the patent: **01.09.2021**
(21) Application number: 12787870.0
(22) Date of filing: 26.09.2012
(51) Int. Cl.: F03B 13/24

(54) **OMNIDIRECTIONAL TURBINE**
OMNIDIREKTIONALE TURBINE
TURBINE OMNIDIRECTIONNELLE À ÉCOULEMENT COMBINÉ

(30) Priority: 26.09.2011 PT 10590511
(43) Date of publication of application: 06.08.2014
(73) Proprietor: OMNIFLOW S.A., Porto 4100-199 (PT)
(72) Inventor: DE CAMPOS RUÃO DA CUNHA, António Pedro, Madalena 4580-255 Paredes (PT)
(74) Representative: Ferreira, Maria Silvina
(86) International application number: PCT/IB2012/055128
(87) International publication number: WO 2013/046134

(56) References cited:
- WO-A1-2006/066310
- GB-A- 2 269 859
- US-A1- 2003 178 856
- US-A1- 2009 315 332
- None

## Description

### Field of the Invention

This invention concerns energy production, specifically referring to a device conceived to improve efficiency levels associated to wind energy production and also on other fluids, like ocean currents and waves.

### Background of the Invention

The omnidirectional airfoil diffuser directs the fluid to the central vertical axis turbine. The fluid tends to be attached to the surface of the diffuser by an effect known as Coanda effect. The principle was first described by the Romanian Henri Coanda, who was the first to recognize the practical application of the phenomenon in aircraft development. The structure of the inverted wing diffuser presents a behavior similar to an aircraft flying at lower speeds or an F1 rear wing. In all these situations the wing presents high attack angles, so solutions like vortex generators, slats and slotted brims may be adopted in the surface of the aerodynamic profile in order prevent the detachment known as stall. In this case the wing is not linear but the profile evolves radially and, therefore, presents an identical behaviour regardless of the direction of the wind.

This principle set the basis for the development of omnidirectional wind turbines. An example of that is the document WO2006/066310 A1, Sureshan et al., wherein it is disclosed an omnidirectional, vertical discharge wind turbine, consisting of a shroud that captures wind from any direction and directs it to flow vertically through a throat section where an aerofoil multi-bladed rotor is mounted. The rotor shaft is connected to an electrical power generator. The intake of the shroud incorporates multiple horizontally curved blades of toroidal form, stacked, staggered and secured in place by multiple aerodynamic vertical walls in the radial direction, to form a central collection chamber for wind.

Document GB 2269859 A, Murray, describes a wind turbine including stator blades, rotor blades and a domed, annular shroud with a flared cone. The shroud surmounts the cone and the stator blades extend between the base of the shroud and a lower region of the cone. The shroud has an upper and lower opening, being the rotor blades mounted in the shroud for rotation about the central axis of the cone.

Document US 2003/178856 A1, Yuji et al., describes a wind power generator comprising a cylindrical wind tunnel body expanding toward a flowing direction of wind, and a wind turbine for generating electricity disposed at a position adjacent to an inlet for wind of the wind tunnel body. An angle of inclination ϕ of a sidewall portion of the wind tunnel body against an axis of the wind tunnel body is in a range from 5 to 25 degrees. The inlet of the wind tunnel body has a curved surface smoothly expanding toward an outside of the wind tunnel body, and a collar-shaped brim.

However, none of the cited prior art discloses a particular structural configuration for its sidewalls as the one now proposed in the present application, which provides significant benefits not found in the conventional art such as:
1. Has low environmental and visual impact;
2. Has a high energy production;
3. Has the ability to work with low wind speed, with turbulent wind and wind of variable direction; typical features of an urban environment;
4. It does not present the disadvantage of having visible moving parts and the inherent shade and shining effects;
5. Low noise generation enabling the positioning close to people and housing.

In fact, the wind speed is extremely important for the amount of energy a wind turbine can convert into electricity, since the energy content of the wind varies with the cube of the average wind speed. If the wind speed is twice as high, it contains eight times as much energy. Therefore, the design of the diffuser, and in particular the structural configuration of its sidewalls promotes wind acceleration due to its inverted wing geometry. This enables the central turbine to reach a higher rotation and produce more energy, besides starting to produce energy sooner.

### Summary of the Invention

The present invention describes a combined omnidirectional flow turbine system comprising the following elements:
- at least one rotor (2) with blades (3) attached to an element transformer of mechanical energy into electric energy (4); wherein the at least one rotor (2) is disposed in a vertical position;
- a motionless structure (1, 9) which comprises an aerodynamic element with the shape of an inverted radial wing;
- a mechanical support structure (12) of the rotor (2); and
- an attachment element (7) of the turbine to a base; characterized in that:
   the aerodynamic element surrounds the at least one rotor (2) located therein; and
   the motionless structure comprises a brim shaped aerodynamic deflector (6) in an upper portion thereof.

In relation to the aerodynamic profiles that may be used in the aerodynamic shape of the inverted radial wing (1; 9), these profiles may vary within the following intervals:
- Thickness: 1-20%; preferably 2-15%, more preferably 5-8%;
- Camber: 5%-25%, preferably 8-15%, more preferably 10-12%;
- Point of maximum Camber: 1-8; preferably 2-7, more preferably 3-4;
The aerodynamic shape may be described according to the standard of the National Advisory Committee for Aeronautics (NACA) .

In an embodiment of the invention, the rotor blades (3) of the combined omnidirectional flow turbine present a variable angle and/or pitch.

In another embodiment of the invention, the mounting mast (7) of the combined omnidirectional flow turbine comprises additional profiles of inverted wing.

In yet another embodiment of the invention, the structure (1) of the combined omnidirectional flow turbine is divided in multi-elements (9) with at least two aerodynamic elements.

In another embodiment of the invention, the combined omnidirectional flow turbine comprises vortex generators and/or textured areas on the surface of the structure (1; 9) .

In yet another embodiment of the invention, the rotor (2) of the combined omnidirectional flow turbine presents an electronic or mechanical display for the automatic control of the angle of the blades (3).

In an embodiment of the invention, the rotor blades (3) of the combined omnidirectional flow turbine are made in a composite material, magnesium alloys or injected polymers.

In another embodiment of the invention the combined omnidirectional flow turbine uses secondary flows starting from the HAVAC systems.

In yet another embodiment of the invention, the electric generator or other means of transforming the mechanic energy (4) of the combined omnidirectional flow turbine is located at the center of the turbine or at the ground level, being the transmission ensured by a shaft.

In an embodiment of the invention, the external surface of the structure (1; 9) of the combined omnidirectional flow turbine is covered with photovoltaic cells.

In another embodiment of the invention, the mounting mast (7) of the combined omnidirectional flow turbine has additional diffusers.

In an embodiment of the invention, the structure (1) of the combined omnidirectional flow turbine is made in a metallic material, in a polymeric material, in a composite material, in concrete or in textile materials.

It is also an objective of the present invention the use of the combined omnidirectional flow turbine on the ground, at sea with floating devices and under water.

### Description of the Invention

The present invention describes an effective turbine in maximizing the energy that can be derived with a rotor in a fluid. This turbine uses a rotor (2) similar to a conventional turbine with a horizontal axle but placed in a vertical position inserted in a static diffuser with the shape of an inverted wing. The motionless structure (1) is influenced by 2 combined flows, enhancing the energy produced by the rotor (2).

The rotor (2) is attached to an element for transforming the mechanic energy integrated in the structure (1) with an inverted wing aerodynamic shape. The system does not have an orientation mechanism with the direction of the wind since it is completely omnidirectional and presents only one moving part, the rotor (2) with blades (3). The turbine also comprises an aerodynamic deflector with a brim (6) in the upper portion of the structure (1).

This invention is applicable in the industry of energy production, namely in micro-generation, as well as large power systems.

The invention described herein comprises a motionless structure with a diffuser with the shape of an inverted wing that directs a fluid, namely the wind, from any direction, omnidirectional, and directs/speeds the fluid to a rotor of vertical axis located in the center of the diffuser. Therefore, the rotor does not have to align itself with the direction of the fluid, as is the case with the turbines of horizontal axis.

The device operates with two combined flows. The lower flow and the upper flow. In the lower flow the fluid is directed in an ascending direction towards the central turbine independently of its direction. As a result of the aerodynamic profile the flow is accelerated in an interval comprised between 1.4x and 1.8x, constituting, thus, the lower flow speed. At the time, the flow passes through the rotor that withdraws a part of its kinetic energy. The upper flow passes through the upper area of the device and combines itself with the lower flow causing an aspiration effect in the turbine resulting from this low pressure area.

Due to this combination of upper and lower flows, the area that influences the turbine is larger than the area of the rotor. This situation does not happen with any other turbine model known in the state of the art.

As a result of this influence in the combination of both flows, the ratio of mechanical power may reach a value higher than 0.593, which makes that this rotor does not share the same conditions defined in the upper limit of the extractable power in the flow indicated by BETZ.

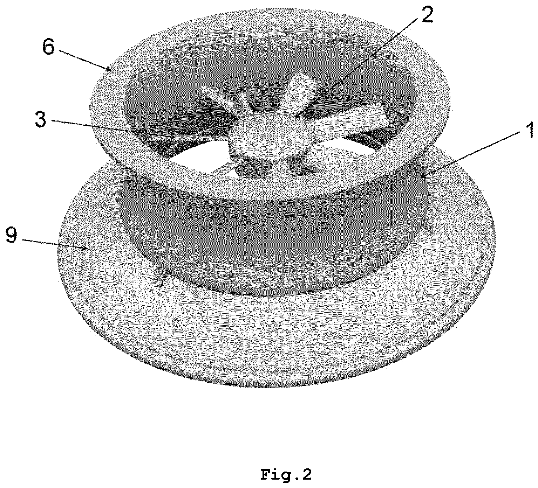

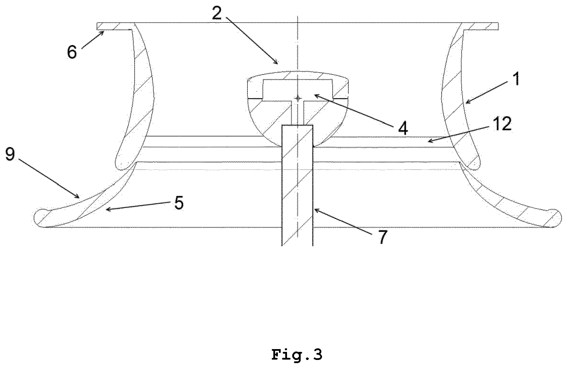

In order to enhance the lower flow and prevent its separation from the surface, the structure may be divided in multi-elements (9) of aerodynamic profiles, namely in 2, 3 or 4 elements (see figures 2, 3, 6). Furthermore, the development of turbulence in the inner surface may have a positive effect in preventing the flow separation, so that the use of the vortex generators and/or areas with texture on the surface may be applied, for example, similar to the embossments in the golf balls.

As a result of its geometry, the now presented device promotes the acceleration of the flow, preferably in the area of the tip of the blade of the central turbine that, as a result of this factor, presents a higher torque. This allows a smaller turbine to have a performance higher than the one of a conventional turbine, increasing the efficiency.

Since the turbine has a smaller diameter, the dimension of the blades shall be smaller which reduces the production costs and enables the possibility of using not only high performance materials such as composites and magnesium alloys but also materials of high production rate and low cost, such as injected polymers.

Since the turbine is in the horizontal central position and it does not need to align with the direction of the wind, the device enables the use of secondary flows from HVAC (Heating, Ventilation and Air Conditioning) systems, such as forced air-aspiration, ventilation, air-conditioning, etc. It, thus, allows the cogeneration operation, recovering some of the energy used to activate these devices.

Since they do not have an orientation mechanism with the direction of the wind, the mechanical parts are the simplest and the easiest to maintain. The generator may be located at the center of the turbine or at the ground level for an easier maintenance. In this last situation, the rotor shall be connected to the generator in the soil by a shaft.

Taking into account that the tip of the blade is clear from any obstacle, such as the tower, and all the rotor is protected by the diffuser, the noise emitted by the apparatus is much lower, which represents an advantage with the reduction of the emission of noise, enabling also the operation of the rotor with higher rotation. A generator of higher rotation requires less permanent magnets, which renders the generator less expensive.

The entire structure is scalable to the available area and the required needs, and the structure can be divided in multiple sections in order to simplify the transport and the assembly.

The outer surface of the structure can be covered with photovoltaic cells so that the motionless surface is actively used and the energy production is maximized.

This invention is also capable of being installed at sea with floating devices in order to explore off-shore winds, and also be placed underwater and explore ocean currents and waves.

The support mast may accommodate additional diffusers in order to balance the systems before a certain situation. Therefore, the system may, under certain conditions, be subject to corrections of an aerodynamic type.

The outer surface of the diffuser may be graphically decorated. Therefore, the device may be used to convey a message and be used for advertising purposes.

Example of a typical small installation:
- Turbine: 1.70 m diameter
- Rated Power (Wind): 1.08 kW at 11.0 m/s (60% efficiency)
- Maximum Power (Wind): 2.00 kW at 15.0 m/s
- Annual Wind Production (estimated): 2190 kW/year + Photovoltaic Solar Cells Annual Production: 2890 kW/year (wind + solar)
- Reduction of 70% in the energy bill of an average house, or 100% of an efficient modern house.

### Brief description of Figures

For an easier understanding of the invention we attach hereto the figures that represent preferred embodiments of the invention but do not intend to serve as a constraint to the object of the present invention.

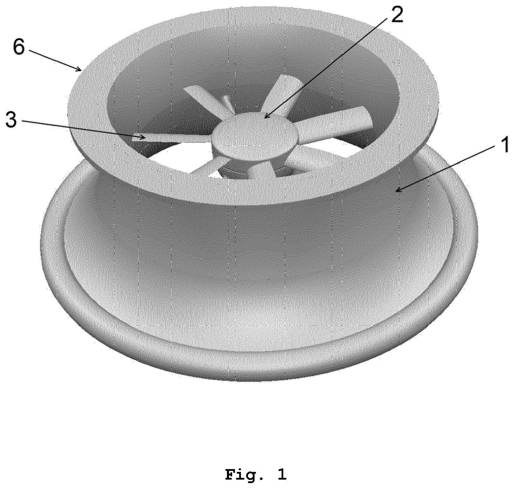

Fig. 1 is a schematic representation in isometric view of the device of the invention - Option of a structure with a single aerodynamic element with the shape of an inverted wing. In this figure the following elements are comprised:
   1 - structure;
   2 - central rotor;
   3 - rotor blade;
   6 - brim.
Fig. 2 is a schematic representation in isometric view of the device of the invention - Option of a structure with two aerodynamic elements in shape of an inverted wing. In this figure the following elements are comprised:
   1 - structure;
   2 - central rotor;
   3 - rotor blade;
   6 - brim
   9 - aerodynamic multi-elements.
Fig. 3 is a schematic representation of a side view of the device with two multi-elements. In this figure the following elements are comprised:
   1 - structure;
   2 - central rotor;
   4 - element for the transformation of the mechanical energy namely an electric generator;
   5 - lower flow;
   6 - brim;
   7 - mounting mast;
   9 - aerodynamic multi-element;
   12 - support structure.
Fig. 4 is a schematic representation of a side view of the flow through the device. In this figure the following elements are comprised:
   1 - structure;
   5 - lower flow;
   6 - brim;
   10 - vorticity
   11 - upper flow.

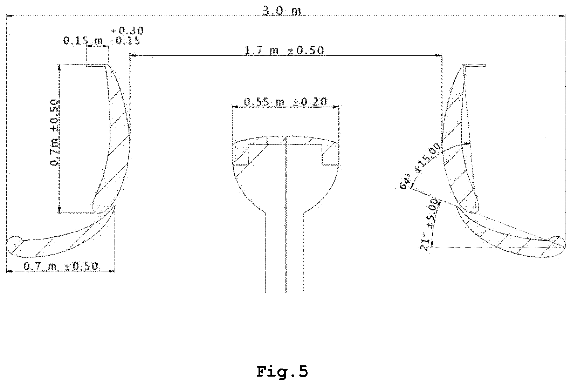

Fig. 5 is a schematic representation of a side view of a preferred embodiment of a 3 meter device, where:
   - the angle of the 1st wing can vary between 54° ± 15°, the dimensions between 0.7 m ± 0.5 m;
   - the angle of the 2nd wing can vary between 21° ± 5°, the dimensions between 0.7 m ± 0.5 m;
   - the dimension of the rotor varies between 0.55 m ± 0.2 m;
   - the dimension of the deflector between 0.15 m +(0.3 m; -0.15 m).

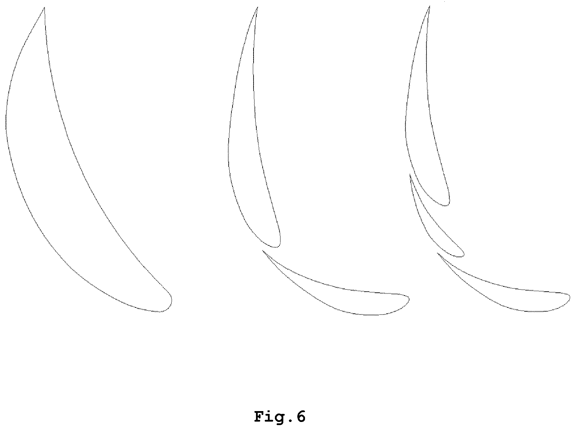

Fig. 6 is a schematic representation of a side view of possible arrangements of the aerodynamic multi-elements of the inverted wing with, namely, 1, 2, 3 elements that may, on the other hand, see their angle vary.

### Example of an Embodiment of the Invention

Referring to the figures, it will be now described a preferred embodiment of the invention.

The device of the invention consists of a motionless inverted wing structure (1), with a large area of exposure to the flow. This motionless structure can also be divided in at least two or more aerodynamic elements, i.e., multi-elements (9) in order to improve its performance. The aerodynamic elements can also have slots and slats to ensure enhanced flow attachment and prevent stall in the wing.

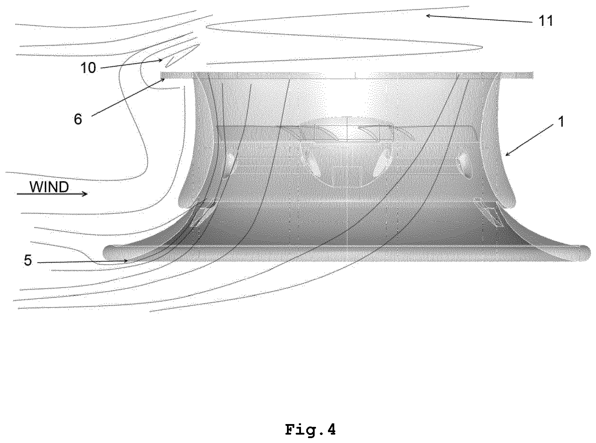

The present device operates with two combined flows as indicated in Figure 4, the lower flow (5) and the upper flow (11).

In the upper flow (11), the fluid becomes attached to the surfaces of the aerodynamic profile (1; 9) and is directed upwards to the tip of the blades (3) of the central rotor (2), regardless of the angle of incidence of the wind in the structure. The air is accelerated by the shape of inverted wing as it approaches the central rotor (2).

The rotor (2) is located in the center of the diffuser that is supported by a support structure (12) and fixed to the ground by a mounting mast (7).

The combined flow is caused by the combination of the upper and lower flow. At the top of the structure there is an aerodynamic brim deflector (6) that generates vorticity (10) that, on the other hand, generates a low pressure zone over the central rotor (2), which enhances the speed of the exhaust flow (11).

In a preferred embodiment of the invention, the device of the invention can make use of aerodynamic elements to improve the performance and minimize the losses resulting from directing the flow to the central turbine (2; 3) being possible to use vortex generators in the surface of the structure (1; 9) and/or texture surfaces to maximize fluid attachment, as well as additional aerodynamic profiles in the central mounting pole.

The central rotor (2) can use blades (3) of variable pitch. With this use, the system automatically optimizes the produced power for a determined wind speed and rotation of the central rotor (2).

As it is evident, the central rotor (2) used in the device according to the invention may assume different aerodynamic profiles as well as the number of blades (3) can vary in order to obtain better results for a specific usage, namely 2, 3, 4, 5, 6, 7, 8, 9 blades as well as a twin rotor.

The structure (1) may be made with aerodynamic profiles of different shapes. The shape and the angles of attack in relation to the approaching flow are, thus, variable. In the same way the same invention can be conceived so that the air intake can, alternatively, direct the flow in a descending direction.

The structure can be fabricated in a solid version in a metal such as steel, aluminum or fiberglass composite. The structure can be made also with reinforced building materials such as concrete that can be used for larger scales or in environments such as water. The structure can be also manufactured with flexible materials like a sail, or a wing where the shape is made from sections and covered by a resistant film. This method has the advantage of presenting a very low weight and can be more economically viable for some scales of the product.

The following claims additionally define preferred embodiments of the present invention.

## Claims

1. Combined omnidirectional flow turbine comprising the following elements:
- at least one rotor (2) with blades (3) attached to an element transformer of mechanical energy into electric energy (4); wherein the at least one rotor (2) is disposed in a vertical position;
- a motionless structure (1, 9) which comprises an aerodynamic element with the shape of an inverted radial wing;
- a mechanical support structure (12) of the rotor (2); and
- an attachment element (7) of the turbine to a base;
**characterized in that**:
the aerodynamic element surrounds the at least one rotor (2) located therein; and
the motionless structure comprises a brim shaped aerodynamic deflector (6) in an upper portion thereof.

2. Turbine according to the previous claim, wherein the mentioned motionless structure (1) is divided in at least two multi-elements (9) with an aerodynamic shape of an inverted wing, with preferably 3 or 4 elements.

3. Turbine according to the previous claim wherein the transforming element of mechanical energy into an electric energy (4) is an electric generator.

4. Turbine according to the previous claims wherein the rotor blades (3) present a variable angle and/or pitch.

5. Turbine according to the previous claims, comprising vortex generators and/or areas with a texture in the internal surface of the motionless structure (1; 9).

6. Turbine according to the previous claims, wherein the rotor (2) comprises an electronic or mechanical device for the automatic control of the angle of the blades (3).

7. Turbine according to the previous claims, wherein the rotor blades (3) comprise composite materials, magnesium alloys or injected polymers.

8. Turbine according to the previous claims wherein the turbine employs secondary flows from HVAC systems.

9. Turbine according to the previous claims wherein the energy transformation element (4) is located in the centre of the turbine or at the ground level.

10. Turbine according to the previous claims wherein the external surface of the structure (1; 9) is covered with photovoltaic cells.

11. Turbine according to the previous claims wherein the structure (1) comprises metallic materials, composite materials, concrete or textile materials.

## Patentansprüche

1. Kombinierte omnidirektionale Strömungsturbine, bestehend aus folgenden Elementen:
- mindestens einem Rotor (2) mit Rotorblättern (3), der mit einem Energiewandler von mechanischer Energie in elektrische Energie (4) verbunden ist; worin der mindesten eine Rotor (2) in vertikaler Position angeordnet ist;
- einer bewegungslosen Struktur (1, 9), bestehend aus einem aerodynamisches Element in Form eines invertierten radialen Flügels;
- einer mechanischen Tragestruktur (12) des Rotors (2) und
- einem Befestigungselement (7) der Turbine an einem Sockel;
**dadurch gekennzeichnet, dass**:
das aerodynamische Element den mindestens einen, sich darin befindlichen, Rotor (2) umschließt und
die bewegungslose Struktur einen krempelförmigen aerodynamischen Deflektor (6) im oberen Teil derselben aufweist.

2. Turbine gemäß dem vorherigen Anspruch, worin die erwähnte bewegungslose Struktur (1) in mindestens zwei Multi-Elemente (9) mit einer aerodynamischen Form eines invertierten Flügels, mit vorzugsweise 3 oder 4 Elementen unterteilt ist.

3. Turbine gemäß dem vorherigen Anspruch, worin das umwandelnde Element von mechanischer Energie in elektrische Energie (4) ein elektrischer Generator ist.

4. Turbine gemäß den vorherigen Ansprüchen, worin die Rotorblätter (3) einen variablen Winkel und/oder eine variable Neigung aufweisen.

5. Turbine gemäß den vorherigen Ansprüchen, die Wirbelgeneratoren und/oder Bereiche mit einer Textur auf der Innenfläche der bewegungslosen Struktur (1; 9) aufweist.

6. Turbine gemäß den vorherigen Ansprüchen, worin der Rotor (2) eine elektronische oder mechanische Vorrichtung zur automatischen Steuerung des Winkels der Rotorblätter (3) aufweist.

7. Turbine gemäß den vorherigen Ansprüchen, worin die Rotorblätter (3) aus Verbundwerkstoffen, Magnesiumlegierungen oder gespritzten Polymeren bestehen.

8. Turbine gemäß den vorherigen Ansprüchen, worin die Turbine Sekundärströmungen aus HLK-Anlagen verwendet.

9. Turbine gemäß den vorherigen Ansprüchen, worin sich das Energie-Umwandlungselement (4) in der Mitte der Turbine oder auf Bodenebene befindet.

10. Turbine gemäß den vorherigen Ansprüchen, worin die Außenfläche der Struktur (1; 9) mit Photovoltaikzellen bedeckt ist.

11. Turbine gemäß den vorherigen Ansprüchen, worin die Struktur (1) aus Metallwerkstoffen, Verbundwerkstoffen, Beton oder textilen Materialien besteht.

## Revendications

1. Turbine à flux omnidirectionnel combiné comprenant les éléments suivants :
- au moins un rotor (2) à pales (3) fixé à un élément transformateur d'énergie mécanique en énergie électrique (4) ; dans lequel l'au moins un rotor (2) est disposé dans une position verticale ;
- une structure immobile (1, 9) qui comprend un élément aérodynamique en forme d'aile radiale inversée ;
- une structure de support mécanique (12) du rotor (2); et
- un élément de fixation (7) de la turbine à une base ;
**caractérisée en ce que** :
l'élément aérodynamique entoure l'au moins un rotor (2) situé à l'intérieur ; et
la structure immobile comprend un déflecteur aérodynamique en forme de bord (6) dans une partie supérieure de celle-ci.

2. Turbine selon les revendications précédentes, dans laquelle la structure immobile mentionnée (1) est divisée en au moins deux multi-éléments (9) ayant une forme aérodynamique d'une aile inversée, avec de préférence 3 ou 4 éléments.

3. Turbine selon les revendications précédentes, dans laquelle l'élément de transformation d'énergie mécanique en énergie électrique (4) est un générateur électrique.

4. Turbine selon les revendications précédentes, dans laquelle les pales de rotor (3) présentent un angle et/ou une inclinaison variable.

5. Turbine selon les revendications précédentes, comprenant des générateurs de tourbillons et/ou des zones ayant une texture dans la surface interne de la structure immobile (1 ; 9).

6. Turbine selon les revendications précédentes, dans laquelle le rotor (2) comprend un dispositif électronique ou mécanique pour la commande automatique des angles des pales (3) .

7. Turbine selon les revendications précédentes, dans laquelle les pales de rotor (3) comprennent des matériaux composites, des alliages de magnésium ou des polymères injectés.

8. Turbine selon les revendications précédentes, dans laquelle la turbine utilise des flux secondaires provenant de systèmes CVAC.

9. Turbine selon les revendications précédentes, dans laquelle l'élément de transformation d'énergie (4) est situé au centre de la turbine ou au niveau du sol.

10. Turbine selon les revendications précédentes, dans laquelle la surface externe de la structure (1 ; 9) est couverte de cellules photovoltaïques.

11. Turbine selon les revendications précédentes, dans laquelle la structure (1) comprend des matériaux métalliques, des matériaux composites et des matériaux textiles.
